# EUROPÄISCHE PATENTANMELDUNG

(11) **EP 1 900 638 A2**
(43) Veröffentlichungstag der Anmeldung: **19.03.2008**
(21) Anmeldenummer: 07113209.6
(22) Anmeldetag: 26.07.2007
(51) Int. Cl.: B64F 1/36, B65G 1/00, G01B 7/04

(54) **Fluggepäckförderanlage**

(30) Priorität: 12.09.2006 DE 102006042734
(71) Anmelder: SIEMENS AKTIENGESELLSCHAFT, 80333 München (DE)
(72) Erfinder: König, Frank, 45289, Essen (DE)

(57) **Zusammenfassung**

Die Erfindung betrifft eine Fluggepäckförderanlage mit zur Aufnahme und zum Transport von unterschiedlich dimensionierten Gepäckstücken vorgesehenen unterschiedlich großen Behältern (B). Um die unterschiedlich großen Behälter (B) innerhalb der Anlage zu unterscheiden und zu gewährleisten, dass diese mit einfachen Mitteln sicher und unter Berücksichtigung ihrer Längen- und Größenunterschiede positionsgenauer als bisher angehalten werden können, wird vorgeschlagen, zur Erkennung und zur Steuerung vorzugsweise der übergroßen Behälter innerhalb der Fluggepäckförderanlage ein Magnetsensorensystem (4, 5) zwischen der Behälterbahn (3) und dem Behälter (B) vorzusehen.

## Beschreibung

Die Erfindung betrifft eine Fluggepäckförderanlage mit zur Aufnahme und zum Transport von unterschiedlich dimensionierten Gepäckstücken vorgesehenen unterschiedlich großen Behältern, die aufeinander folgend auf einzeln steuerbaren Fördererabschnitten einer Behälterbahn durch die Anlage bewegbar sind, wobei die Behälter jeweils aus einer das Gepäckstück aufnehmenden, entsprechend dimensionierten nicht metallischen Schale und einem metallischen Halter für die Schale bestehen und wobei Lichtschranken vorgesehen sind, mit denen die Anwesenheit der Behälter erfassbar und deren Haltepunkt in der Anlage mittels einer speicherprogrammierbarer Steuerung festlegbar sind.

In Fluggepäckförderanlagen kommen gewöhnlich unterschiedlich große Gepäckaufnahmebehälter zum Einsatz. Damit wird berücksichtigt, dass die Abmessungen der Gepäckstücke stark variieren, so müssen beispielsweise Skier und andere sperrige Geräte ebenso transportiert werden können, wie Koffer, Rucksäcke und Taschen. Die Gepäckaufnahmebehälter selbst sind gewöhnlich aus Kunststoff, um die Durchleuchtung in den Sicherheitssystemen zu ermöglichen. Angepasst an die Behältergrößen sind auch die metallischen Halter bzw. Unterschalen, auf denen die Behälter aufgesetzt sind, in unterschiedlichen Abmaßen (1250mm und 1600mm) verfügbar. Für Behälter zum Transport von übergroßen Gepäck (sog. OOG-Behälter) wird allerdings eine 2400mm Kunststoffschale auf einer 1600mm metallischen Unterschale montiert, so dass die Kunststoffschale beidseitig übersteht. Wenn innerhalb ein- und derselben Anlage im Mischbetrieb alle unterschiedlichen Behältertypen störungsfrei gefördert werden sollen, ist eine zweifelsfreie Erkennung der Behälter zur folgenden exakten Positionierung an vorgegebenen Haltepunkten sicherzustellen.

Gegenwärtig wird die Positionierung der Behälter mit Hilfe von Lichtschranken ausgeführt. Hierzu wird, kurz bevor ein Behälter dem festgelegten Haltepunktes erreicht, vom Lichtsensor der Lichtschranke ein Signal an die speicherprogrammierbare Steuerung (SPS) gesendet, durch das das Anhalten des Behälters einleitet wird. Hierbei ist allerdings die Reaktionszeit (Zykluszeit) der SPS zu berücksichtigen, d.h. die Zeit, die vergeht, in der das an die SPS gesendete Haltesignal ausgeführt wird. Ist die Zykluszeit zu lang, überfahren die Behälter den anvisierten Haltepunkt. Ist die Zykluszeit durch eine sehr schnelle Übertragung zu kurz, so können die Behälter vor dem gewünschten Haltepunkt zum Stehen kommen. Beide auf die sog. Zykluszeittoleranzen zurückzuführenden Varianten sind im Ergebnis unbefriedigend.

Werden unterschiedlich große Behälter in ein- und derselben Anlage eingesetzt, ergibt sich ein weiteres Problem. Es erscheint unvermeidbar, an allen Haltepunkten der Behälter mehrere Lichtschranken vorzusehen, die die unterschiedlichen Größen der Behälter berücksichtigen und diese positionsgenau abstoppen. Da die zusätzlichen Lichtschranken gewöhnlich auf den gleichen Haltern befestigt werden, entsteht der weitere Nachteil, dass evtl. notwendige Nachjustierungen der Lichtschranke bzw. des Initiators für den Haltepunkt eines Behälters unmittelbare Auswirkungen auch auf den Haltepunkt des jeweils anderen Behälters hat. Abgesehen davon kann es durch die Benutzung der gleichen Messverfahren für unterschiedliche Behälter zu unscharfer Bestimmung des Behältertyps kommen, d.h., die Behälter können nicht sauber auseinander gehalten werden. Im ungünstigsten Fall kann es dadurch zu Überlagerungen auf den Taktbändern kommen, die einem störungsfreien Betrieb der Anlage entgegenstehen und den dem Betreiber zugesicherten Durchsatz nicht erreichen lassen. Dies insbesondere auch deshalb, weil die unterschiedlich großen und damit schweren, insbesondere beladene Behälter, unterschiedliche Bremswege aufweisen, so dass z.B. ein zu schnell d.h., ein vorzeitig abgestoppter Behälter zwei Taktbänder belegen kann.

Aufgabe der vorliegenden Erfindung ist es, eine verbesserte Lösung zum Unterscheiden unterschiedlicher Behälter innerhalb einer Anlage zur Verfügung zu stellen und zu gewährleisten, dass die unterschiedlichen Behälter mit einfachen Mitteln sicher erkannt und unter Berücksichtigung ihrer Längen- und Gewichtsunterschiede positionsgenauer als bisher angehalten werden können.

Zur Lösung der Aufgabe ist erfindungsgemäß vorgesehen, dass zur Erkennung und Steuerung bestimmter, vorzugsweise der übergroßen Behälter, innerhalb der Fluggepäckförderanlage ein Magnetsensorensystem zwischen der Behälterbahn und dem Behälter vorgesehen ist. Es wird also, um den Anforderungen der Erfindung gerecht zu werden, vorgeschlagen, auf die Montage zusätzlicher Lichtschranken für unterschiedliche Behältertypen zu verzichten und stattdessen die Erkennung und Justierung eines Behältertyps, vorzugsweise der OOG-Behälter, mit dem Einsatz eines Magnetsensors zu erreichen. Hiermit wird zusätzlich erreicht, dass Irritationen durch gleiche Messverfahren an unterschiedlichen Behältern vermieden werden, wodurch ein störungsfreier Betrieb ermöglicht wird.

Erfindungsgemäß besteht das Magnetsensorsystem aus einem an der Behälterbahn an entsprechender Stelle angeordneten Magnetsensor und einem an der Unterseite der Schale eines Behälters angeordneten Magnetblech. Das Magnetblech ist vorzugsweise in dem den metallischen Halter überragenden Bereich der Schale an deren geschützten Unterseite angeordnet. Die Verwendung eines derartig ausgestalteten Magnetsensors ermöglicht nicht nur die Erkennung des unterschiedlichen Behältertyps durch den Sensor; es können auch beide Haltepunkte unabhängig von dem Behältertyp justiert und den jeweiligen Erfordernissen angepasst werden. Aufwändige Halter für zusätzliche Lichtschranken entfallen, stattdessen können kleine preiswerte und klemmbare Standardhalter Anwendung finden.

Nach einem besonders günstigen Merkmal der Erfindung ist vorgesehen, dass der Magnetsensor mit einem Relais zum Stoppen des den abzustoppenden Behälter tragenden Fördererabschnittes verbunden ist. Das Haltesignal (StopIni) wird erfindungsgemäß nicht an die SPS weitergeleitet, sondern geht direkt an ein Relais, das den Antrieb des entsprechenden Förderers sofort ausschaltet. Zeitverzögerungen durch die eingangs beschriebene Zykluszeittoleranz treten nicht auf.

Erfindungsgemäß kann zusätzlich zu dem Signal an das Relais ein weiteres Signal an die SPS als Meldung gehen, das ein Behälter am Meldepunkt ansteht. Dieses Signal dient nicht zur Positionierung des Behälters, sondern fungiert lediglich als Belegungssignal. Gleiches gilt auch für das Startsignal (StartIni). Auf diese Weise wird durch die Erfindung eine komplette Entkopplung des Start und Stoppprozesses mit den damit einhergehenden Zykluszeittoleranzen erreicht.

Erfindungsgemäß sind der Magnetsensor und/oder das Magnetblech dergestalt angeordnet, das nur jeweils einer der unterschiedlichen Behältertypen, vorzugsweise der übergroße Behälter von dem Magnetsensor erfasst wird. Mit der Erfindung ist ein produzierbares Anhalten verschiedenartiger Behälter innerhalb einer Gepäckförderanlage mit minimalen, d.h. tolerierbaren Abweichungen des für einen störungsfreien Lauf der Anlage zugrunde liegenden Haltepunktes möglich. Positionierungen des Trays mit einer benötigten Genauigkeit von +/- 30mm sind möglich. Die Lösung verzichtet auf aufwendige zusätzliche Haltevorrichtungen für Lichtschranken, die sich innerhalb der Anlage häufig wiederholen. Es wird mit der Erfindung eine preiswerte und einfach zu realisierende Lösung gefunden.

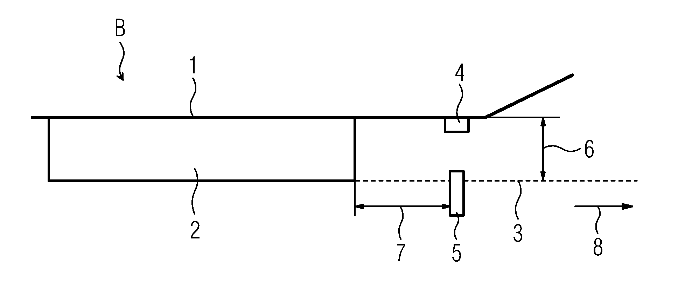

Ein Ausführungsbeispiel der Erfindung ist in der Zeichnung dargestellt und nachfolgend beschrieben. Die einzige Zeichnungsfigur zeigt in grob vereinfachter Darstellung einen erfindungsgemäßen Behälter B der aus der aus Kunststoff bestehenden Schale 1 und einem die Schale tragenden metallischen Halter 2 besteht. Der Behälter B wird auf der Behälterbahn 3 in Pfeilrichtung 8 fortbewegt, wobei der Behälter auf nicht dargestelltem Transportriemen eines Fördererabschnitts aufliegt. Um den Behälter B an einer vorgesehenen Stelle zu positionieren und dazu anzuhalten, ist es erforderlich, dem Fördererabschnitt der Behälterbahn 3 ein Signal zum Anhalten zu geben. Dieses Signal wird vom Behälter selbst ausgelöst, der zu diesem Zweck in dem den metallischen Halter 2 überragenden Abschnitt der Schale 1 ein Magnetblech 4 aufweist, das an der Unterseite der Schale 1 befestigt, in einem geschützten Bereich angebracht ist. Der Abstand 6 zwischen dem Magnetblech 4 und der Behälterbahn 3 ist so gewählt, dass ein im Bereich der Behälterbahn 3 an einem (nicht dargestellten) Halter vorgesehener Magnetsensor 5 die Anwesenheit des Magnetbleches 4 erfasst und in der Lage ist, ein Signal zum Anhalten des Fördererabschnitts abgeben. Dieses Signal kann beispielsweise direkt an ein Relais zum Abschalten des Antriebsmotors des Fördererabschnittes gegeben werden, so dass ein verzögerungsfreies Anhalten des Behälters B auf der Behälterbahn 3 möglich ist. Der Magnetsensor ist in ausreichendem Abstand 7 von dem metallischen Halter 2 entfernt, wenn er das Magnetblech 4 erfasst.

## Patentansprüche

1. Fluggepäckförderanlage mit zur Aufnahme und zum Transport von unterschiedlich dimensionierten Gepäckstücken vorgesehenen unterschiedlich großen Behältern (B), die aufeinander folgend auf einzeln steuerbaren Fördererabschnitten einer Behälterbahn durch die Anlage bewegbar sind, wobei die Behälter jeweils aus einer das Gepäckstück aufnehmenden, entsprechend dimensionierten nicht metallischen Schale (1) und einem metallischen Halter (2) für die Schale (1) bestehen und wobei Lichtschranken vorgesehen sind, mit denen die Anwesenheit der Behälter (B) erfassbar und deren Haltepunkt in der Anlage mittels einer speicherprogrammierbarer Steuerung festlegbar sind,
**dadurch gekennzeichnet,**
**dass** zur Erkennung und Steuerung bestimmter, vorzugsweise der übergroßen Behälter (B) innerhalb der Fluggepäckförderanlage ein Magnetsensorensystem zwischen der Behälterbahn (3) und dem Behälter vorgesehen ist.

2. Fluggepäckförderanlage nach Anspruch 1,
**dadurch gekennzeichnet,**
**dass** das Magnetsensorensystem aus einem an der Behälterbahn (3) an entsprechender Stelle angeordneten Magnetsensor (5) und einer an der Unterseite der Schale (1) eines Behälters (B) angeordneten Magnetblech (4) besteht.

3. Fluggepäckförderanlage nach Anspruch 2,
**dadurch gekennzeichnet,**
**dass** das Magnetblech (4) in dem den metallischen Halter (2) überragenden Bereich der Schale (1) an deren geschützter Unterseite angeordnet ist.

4. Fluggepäckförderanlage nach Anspruch 1 bis 3,
**dadurch gekennzeichnet,**
**dass** der Magnetsensor (5) mit einem Relais zum Stoppen des den abzustoppenden Behälter (B) tragenden Fördererabschnittes verbunden ist.

5. Fluggepäckförderanlage nach einem der Ansprüche 1 bis 4,
**dadurch gekennzeichnet,**
**dass** der Magnetsensor (5) und/oder das Magnetblech (4) der Gestalt angeordnet sind, dass nur jeweils einer der unterschiedlichen Behältertypen, vorzugsweise der übergroße Behälter (B) von dem Magnetsensor (5) erfasst wird.

6. Fluggepäckförderanlage nach einem der Ansprüche 1 bis 4,
**dadurch gekennzeichnet,**
**dass** der Magnetsensor (5) ein Belegungssignal an die SPS als Meldung abgibt, dass ein Tray am Meldepunkt ansteht.
